(19) Europäisches Patentamt
European Patent Office
Office européen des brevets

(11) **EP 2 573 639 B1**

(12) **EUROPEAN PATENT SPECIFICATION**

(45) Date of publication and mention
of the grant of the patent:
**28.10.2020 Bulletin 2020/44**

(51) Int Cl.:
***G05D 1/02*** *(2020.01)*

(21) Application number: **12182383.5**

(22) Date of filing: **30.08.2012**

(54) **Mobile robot and controlling method of the same**

Mobiler Roboter und Ansteuerungsverfahren dafür

Robot mobile et son procédé de commande

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2011 KR 20110094803**

(43) Date of publication of application:
**27.03.2013 Bulletin 2013/13**

(73) Proprietor: **LG Electronics Inc.
Youngdungpo-gu
Seoul 150-721 (KR)**

(72) Inventors:
• **LEE, Seongsoo
Gyeonggi-Do (KR)**
• **BAEK, Seungmin
Seoul (KR)**

(74) Representative: **Vossius & Partner
Patentanwälte Rechtsanwälte mbB
Siebertstrasse 3
81675 München (DE)**

(56) References cited:
**GB-A- 2 376 536     US-A1- 2009 028 387**

• FUKUDA T ET AL: "Navigation system based on ceiling landmark recognition for autonomous mobile robot", INDUSTRIAL ELECTRONICS, CONTROL, AND INSTRUMENTATION, 1993. PROCEEDING S OF THE IECON '93., INTERNATIONAL CONFERENCE ON MAUI, HI, USA 15-19 NOV. 1993, IEEE, NEW YORK, NY, USA, 15 November 1993 (1993-11-15), pages 1466-1471, XP010109234, DOI: 10.1109/IECON.1993.339287 ISBN: 978-0-7803-0891-6
• R Siegwart: "introduction to autonomous mobile robots", , 1 January 2004 (2004-01-01), XP055054850, Massachusetts ISBN: 978-0-26-219502-7 Retrieved from the Internet: URL:http://www.ee.ui.ac.id/muis/course_fil e/robotics/Introduction_to_Autonomous_Mobi le_Robots.pdf [retrieved on 2013-02-28]

**EP 2 573 639 B1**

## EP 2 573 639 B1

**Description**

This specification relates to a mobile robot capable of recognizing its own position using image information and detecting a position of a recharging station, and a controlling method thereof.

Generally, a robot has been developed for an industrial use, and has managed some parts of factory automation. As the robot is applied to various fields recently, medical robots, space robots, home robots used at homes, etc. are being developed.

A representative of the home robots is a robot cleaner, a kind of home electronic appliance capable of performing a cleaning operation by sucking peripheral dust particles or foreign materials with autonomously moving on a predetermined region. This robot cleaner is provided with a rechargeable battery, and is provided with an obstacle sensor for avoiding an obstacle while moving.

In recent time, an application technology using a mobile (movable) robot, especially, a robot cleaner is being developed. For example, with the mobile robot having a networking function developed, it may be possible to send a cleaning command from a remote place or monitor an indoor condition. Also, mobile robots having a self-position recognition and map composition function using cameras or various types of sensors are being developed.

GB 2 376 536 A relates to a robot cleaner, a system using a robot cleaner, and a method of connecting a robot cleaner to an external recharging device.

Therefore, an aspect of the detailed description is to provide a mobile robot capable of detecting image information using cameras and recognizing its own position using the image information, and a controlling method thereof.

Another aspect of the detailed description is to provide a mobile robot capable of fast detecting a position of a charging station using image information, and a controlling method thereof.

Another aspect of the detailed description is to provide a mobile robot capable of fast moving to a charging station based on image information and guideline information sent from the charging station, and a controlling method thereof.

To achieve these and other advantages and in accordance with the purpose of this specification, as embodied and broadly described herein, there is provided a mobile robot including an image detection unit configured to detect image information by capturing images of surroundings, a storage unit configured to store the image information, and a controller configured to recognize an absolute position by comparing currently detected image information with stored image information, and detect a position of a charging station based on the recognition result of the absolute position. The storage unit may further store position information corresponding to the image information. The controller may compare image information related to a region where the charging station is located with the currently detected image information, and detect the position of the charging station based on the comparison result.

The robot cleaner may further include an object sensing unit having a charging signal sensor to receive a guideline signal transmitted by the charging station.

The robot cleaner may further include an object sensing unit having a charging signal sensor to receive a guideline signal transmitted by the charging station.

To achieve these and other advantages and in accordance with the purpose of this specification, as embodied and broadly described herein, there is provided a controlling method for a mobile robot including an image detecting step of detecting image information by capturing images of surroundings, an image comparing step of comparing the currently detected image information and pre-stored image information, a position recognizing step of recognizing an absolute position of the mobile robot based on the comparison result from the image comparing step, and a charging station detecting step of detecting a position of the charging station based on the recognition result of the absolute position.

In accordance with another exemplary embodiment of this specification, a mobile robot may include an image detection unit configured to detect image information by capturing images of surroundings, a storage unit configured to store the image information, an object sensing unit having a charging signal sensor to receive a guideline signal transmitted by the charging station, and a controller configured to recognize an absolute position by comparing currently detected image information with stored image information, detect a position of a charging station based on the recognition result of the absolute position, and dock the mobile robot with the charging station according to the guideline signal.

In a mobile robot and a controlling method of the same according to those exemplary embodiments, the mobile robot may recognize a precise position thereof by detecting a plurality of images through an image detection unit, extracting one or more feature points from the plurality of images, and comparing allowed to quickly move to the charging station upon the lack of residual battery capacity, resulting in improvement of stability and operation efficiency of a system.

In accordance with the exemplar embodiments, the position of the charging station can be detected based on the image information and a guideline signal can be received within a signal reception range, resulting in facilitation of docking with the charging station.

In accordance with the exemplar embodiments, the precisely recognized position may be linked to an indoor map to perform cleaning or moving, resulting in improvement of efficiency of the system.

In accordance with the exemplar embodiments, in recognizing a position of the mobile robot based on images, errors, which may be caused when the mobile robot is placed at an arbitrary position or a position change occurs, can be reduced, and the mobile robot can precisely recognize its own position within a short time.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the scope of the disclosure will become apparent to those skilled in the art from the detailed description.

The accompanying drawings, which are included to provide a further understanding of the disclosure and are incorporated in and constitute a part of this specification, illustrate exemplary embodiments and together with the description serve to explain the principles of the disclosure.

In the drawings:

FIG. 1 is a perspective view showing an appearance of a mobile robot in accordance with this specification;
FIG. 2 is a view showing an operation of extracting feature points in accordance with exemplary embodiments;
FIGS. 3 and 4 are block diagrams each showing a configuration of a movable robot in accordance with exemplary embodiments;
FIG. 5 is an enlarged view showing a charging signal sensor in accordance with exemplary embodiments; and
FIGS. 6 to 8 are flowcharts each showing a method for controlling a mobile robot in accordance with exemplary embodiments.

Description will now be given in detail of the exemplary embodiments, with reference to the accompanying drawings. For the sake of brief description with reference to the drawings, the same or equivalent components will be provided with the same reference numbers, and description thereof will not be repeated.

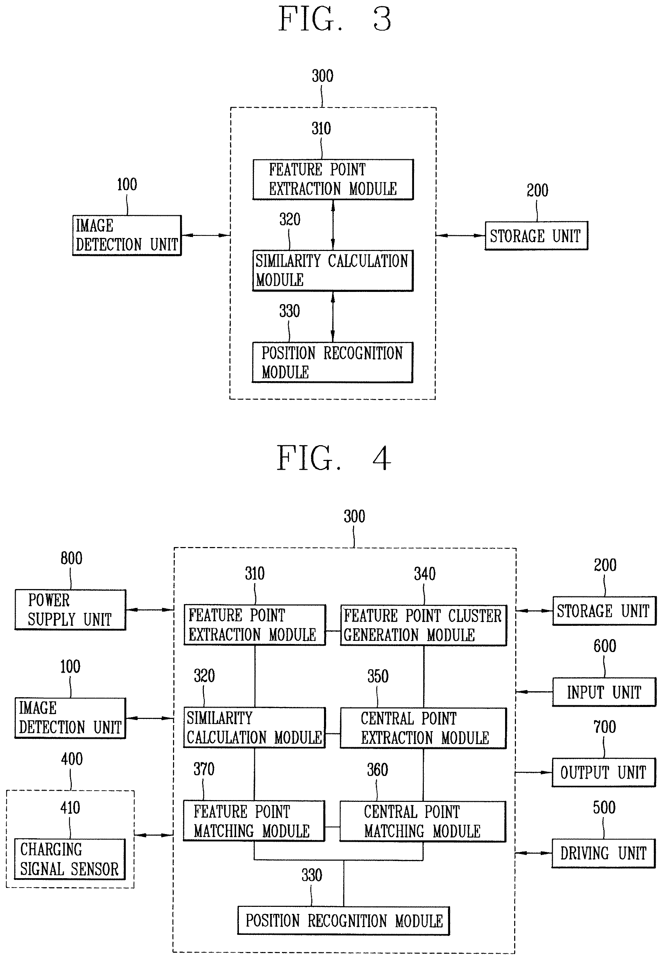

Referring to FIG. 3, a mobile robot in accordance with one exemplary embodiment may include an image detection unit 100 for capturing images of the periphery to detect image information, a storage unit 200 for storing the image information, and a controller 300 for recognizing an absolute position thereof by comparing currently detected image information with stored image information, and detecting a position of a charging station based on the recognition result of the absolute position.

The storage unit 200 may further store position information corresponding to the image information in addition to the image information. The controller 300 may compare image information related to a region where a charging station is located with currently detected image information, and detect the position of the charging station using the comparison result. For example, the storage unit 200 may previously store image information relating to a region where the charging station exists and a position of the charging station, and the controller 300 may compare the stored image information with detected image information to detect the position of the charging station.

The storage unit 200 may further store information relating to at least one of obstacle, indoor map (cleaning map), region and path, as well as the image information and the position information. The storage unit 200 may store a control program for control of the mobile robot and associated data. The storage unit 200 may further store a cleaning mode, a traveling method, and a position of the charging station.

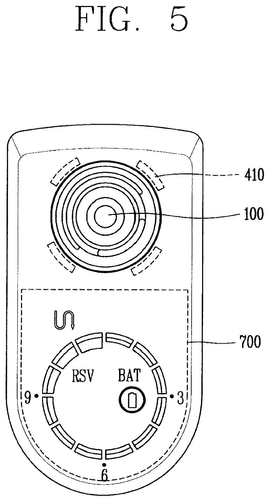

The image detection unit 100 may detect image information by capturing peripheral regions. The image detection unit 100, as shown in FIG. 5, may be installed to face the top or the front, and be provided with cameras for capturing the periphery of the mobile robot to detect image information. When the image detection unit 100 is provided with a plurality of cameras, the cameras may be formed at an upper surface or side surface of the mobile robot by a predetermined distance or angle. The image detection unit 100 may be used as another type of position recognition unit. The image detection unit 100 may include a lens connected to the camera to focus on an object to be captured. The lens may be a lens having a wide viewing angle such that every peripheral region, for example, every region of a ceiling can be captured even at a predetermined position.

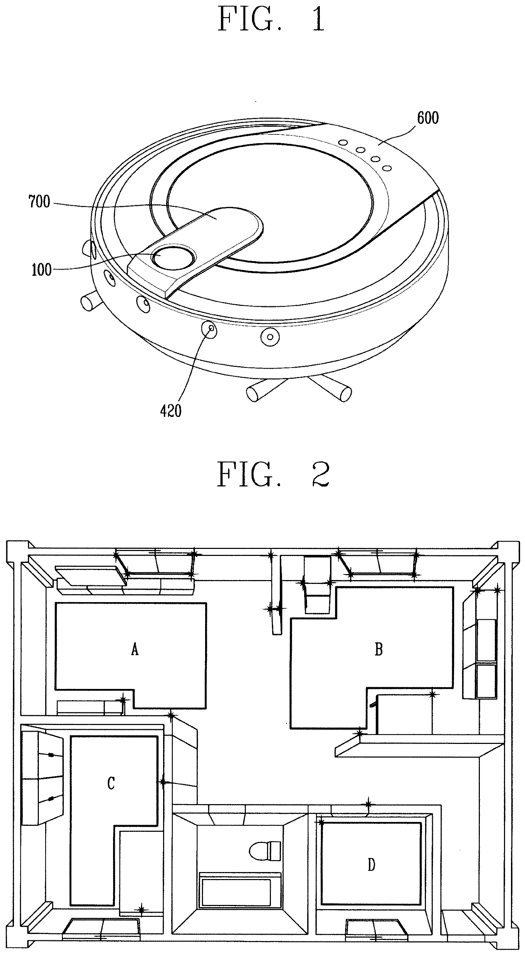

The controller 300 may extract one or more feature points from the image information detected by the image detection unit 100 and the image information stored in the storage unit 200. The controller 300 may extract one or more feature points having coordinate information with respect to each of a plurality of images. Referring to FIG. 2, feature points of images detected through the image detection unit 100 may include natural indicators such as a ceiling of an upper region, a fluorescent lamp of a front region and an interior structure from the images. Here, the feature point includes feature point information consisting of a position, an orientation and a descriptor on the image. The descriptor indicates a characteristic of the feature point, and corresponds to a matrix of a predetermined size and including the feature point on the image. The descriptor includes a type or a shape of a structure corresponding to a position extracted from the image.

The controller 300 may calculate a similarity between the feature points based on the feature point information, and recognize an absolute position using the similarity. Here, the controller 300 may match the feature points with each other based on the pre-stored image information in the storage unit 200, namely, the images or the feature points, and the image information related to the images detected by the image detection unit 100, and recognize a position of the mobile robot. The feature points may have a distance therebetween in a feature point space for determining a similarity. That is, the feature points have a high similarity when the distance therebetween is short. On the other hand, the feature points have a low similarity when a distance therebetween is long. The feature points may be expressed, for example, as ($x_{1,i}$, $y_{1,i}$) and ($x_{2,i}$, $y_{2,i}$). The feature points may alternatively be expressed as points on a three dimensional (3D) coordinate system. Here, the distance $\Delta$ between the feature points may be represented as the following Equation 1.

【Equation 1】

$$\Delta = \sqrt{(x_{1,i} - x_{2,i})^2 + (y_{1,i} - y_{2,i})^2}$$

For example, when the distance between feature points obtained by Equation 1 is less than a predetermined value, the controller 300 determines that the feature points are the same feature point, and matches the feature points with each other.

Referring to FIG. 3, the controller 300 may include a feature point extraction module to extract one or more feature points each having feature point information from the image information detected by the image detection unit 100 and the image information stored in the storage unit 200. The controller 300 may further include a similarity calculation module 320 to compare those feature point information so as to calculate a similarity between those image information, and a position recognition module 330 to recognize the absolute position based on the similarity.

The feature point extraction module 310, the similarity calculation module 320 and the position recognition module 330 of the controller 300 may be configured as different types of units or be combined into a single microprocessor.

The feature point extraction module 310 may be configured to extract one or more feature points from the image information detected by the image detection unit 100 and the image information stored in the storage unit 200. The feature point extraction module 310 may extract one or more feature points each having coordinate information, with respect to each of a plurality of images. Referring to FIG. 2, the feature points indicate natural indicators such as a ceiling of an upper region, a fluorescent lamp of a front region and an interior structure, which are from the images. Here, the feature point includes feature point information consisting of a position, an orientation and a descriptor on the image, and the descriptor indicates extraction information of the feature point.

The similarity calculation module 320 may calculate the similarity between the feature points based on the feature point information, and the position recognition module 300 may recognize the absolute position based on the similarity. Here, as shown in FIG. 3, the similarity calculation module 320 may calculate the similarity using the pre-stored image information in the storage unit 200, namely, the images or the feature points, and the image information related to the images detected by the image detection unit 100. The feature points may have a distance therebetween in a feature point space for determining similarity. That is, the feature points have a high similarity when the distance therebetween is short. On the other hand, the feature points have a low similarity when a distance therebetween is long.

The image detection unit 100 may detect peripheral image information while performing a cleaning operation or moving, and the storage unit 200 may store the image information. Here, the storage unit 200 may previously store image information within a region in form of a database, in addition to the detected image information. When the mobile robot is moved to another region by a user or other reasons, the image detection unit 100 detects image information at a position to which the mobile robot has moved. Here, the image detection unit 100 recognizes the position of the mobile robot based on a comparison result between the image information detected by the image detection unit 100 and the image information stored in the storage unit 200. Here, the position may not be a relative position, which is recognized by a position recognition unit, for example, a wheel sensor, a gyro sensor, an acceleration sensor or the like, but an absolute position indicating to which position within a region the position corresponds.

The mobile robot may be provided with left and right main wheels movably disposed at both lower sides thereof. At both side surfaces of each main wheel may be installed handles for facilitating a user to grab them. The driving unit 500 may be connected to the left and right main wheels, and provided with specific wheel motors for rotating the wheels. As the driving unit 500 drives the wheel motors, a main body of the mobile robot is movable. The wheel motors are connected to the main wheels, respectively, so as to rotate the main wheels. The wheel motors may operate independent of each other and be bidirectionally rotatable. The mobile robot may further be provided with one or more auxiliary wheels at a rear surface thereof so as to support the main body and minimize friction between a lower surface of the main body and a floor (a surface to be cleaned), thereby allowing for smooth movement of the mobile robot. Wheel sensors may be connected to the left and right main wheels, respectively, so as to sense the number of turns (rpm) of the main wheels. Here, the wheel sensor may be a rotary encoder. The rotary encoders may sense and output the number of turns of the respective left and right wheels when the mobile robot moves in a traveling mode or a cleaning mode. The controller 300 may calculate a rotation speed of each of the left and right wheels based on the number of turns. The controller 300 may also calculate a rotation angle based on the difference of the number of turns of the left and right wheels. Accordingly, the controller 300 may recognize a relative position using the wheel sensors. As another example, the mobile robot may be provided with an acceleration sensor for recognizing speed and position thereof or a gyro sensor for detecting a rotation speed of a robot cleaner, so as to detect a relative position thereof.

FIG. 4 shows a configuration of a mobile robot in accordance with another exemplary embodiment. As shown in FIG. 4, the controller 300 may further include, in addition to those modules described in the aforementioned one exemplary embodiment, a feature point cluster generation module 340 to divide the feature points into a predetermined number of feature point clusters, a central point extraction module 350 to extract a central point representative of feature points belonging to each of the feature point clusters, and a central point matching module 360 to match the feature points with each other based on feature point information related to the central points.

The controller 300 may further include a feature point matching module 370 to match feature points within images, having a similarity calculated more than a predetermined reference value, with feature points within the newly detected images.

The feature point cluster generation module 340 may divide a plurality of feature points into a predetermined number (for example, 16, 32, 64) of clusters to generate a predetermined number of feature point clusters. The central point extraction module 350 may extract central points from the individual clusters. Here, the central point extraction module 350 may use a K-means algorithm, for example. The central points may include properties of the feature points within each cluster. A relationship between the feature points and the central points may be represented in form of a histogram. Each image may be represented using such relationship. Each image information represented using the central points may be stored in the storage unit 200.

The similarity calculation module 320 may calculate the similarity of a plurality of images using the central points. The central point matching module 360 may match the central points with each other based on the similarity calculation result. The similarity of the images represented using the central points may be calculated from the relationship between histograms. The similarity of the images may be calculated by a method, such as a running total of a Euclidean distance, for example, by the following Equation 2.

## 【Equation 2】

$$\alpha = \frac{\sum_{md=1}^{K} H_1(md) H_2(md)}{\sqrt{\sum_{md=1}^{K} (H_1(md))^2 \sum_{md=1}^{K} (H_2(md))^2}}$$

where $\alpha$ denotes similarity, H1 and H2 denote histograms, and K denotes the number of clusters. Generally, images obtained by consecutively capturing a specific region exhibits a high similarity, whereas images obtained from different regions exhibit a low similarity. However, the images from the different regions may exhibit a high similarity. To distinguish those, the feature point matching module 370 may perform a feature point matching.

The controller 300 may select a specific number of images which show a high similarity calculated between the central points, and match feature points within the selected images with feature points within newly detected images. The controller 300 may then recognize an absolute position based on the matching results of the feature points. A matching algorithm for matching the central points or feature points may be existent in various forms, so detailed description of the matching algorithm will be omitted.

The feature point extraction module 310, the similarity calculation module 320, the position recognition module 330, the feature point cluster generation module 340, the central point extraction module 350, the central point matching module 360 and the feature point matching module 370 may be configured as different types of units, respectively. Each module is divided for the sake of explanation, so it may alternatively be combined into a single microprocessor.

Referring to FIG. 4, the mobile robot according to the one exemplary embodiment may further include an object sensing unit 400 including a charging signal sensor 410 for receiving a guideline signal transmitted by a charging station. The mobile robot may receive a guideline signal generated by the charging station using the charging signal sensor 410 so as to check a position and an orientation of the charging station. The charging station may transmit a guideline signal which informs of an orientation and a distance such that the mobile robot can return thereto. The mobile robot may receive the signal transmitted by the charging station to determine its current position and accordingly set a moving direction to return to the charging station. The charging signal sensor 410 may be an infrared ray sensor, an ultrasonic sensor, a Radio Frequency (RF) sensor, and the like, and typically the infrared ray sensor is used. However, a sensor has a transmission/reception range. Accordingly, when the mobile robot is moved away from the charging station by more than a predetermined distance, the mobile robot is unable to receive the guideline signal. Here, the mobile robot may move to the position of the charging station, which is detected based on the image information, and then receive the guideline signal so as to precisely dock with the charging station.

The charging signal sensor 410 may be installed at one side of the inside or outside of the mobile robot. The charging signal sensor 410, as shown in FIG. 5, may be installed below an output unit 700 or adjacent to the image detection unit 100, for example. Referring to FIG. 5, the output unit 700 may display a residual battery capacity on a screen.

Referring to FIG. 4, the mobile robot may further include a power supply unit 800. The power supply unit 800 may include a rechargeable battery so as to supply electric power into the mobile robot. The power supply unit 800 may supply electric power for driving each unit, and electric power necessary for the mobile robot to move or perform a cleaning operation. For a lack of residual power, the mobile robot may move to the charging station to be recharged with charging current. The mobile robot may further include a battery sensing unit to sense a charging state of the battery and transmit the sensing result to the controller 300. The battery may be connected to the battery sensing unit such that the residual battery capacity and the charging state are transferred to the controller 300. The residual battery capacity may be displayed on a screen of the output unit. The battery may be located at a lower central portion of the mobile robot, or located at one of left and right sides such that a dust bin is located at the lowermost end of the main body. For the latter, the mobile robot may further include a balance weight for avoiding weight unbalancing of the battery. The controller 300 may predetermined a reference value (residual battery capacity) and compare a sensing result of the battery sensing unit with the reference value. If the sensing result is less than the reference value according to the comparison result, the controller 300 may move the mobile robot to the charging station to be charged.

The object sensing unit 400, as shown in FIG. 1, may include first sensors 420 installed on an outer circumferential surface at the front of the mobile robot by predetermined intervals. The object sensing unit 400 may further include a second sensor installed to have a surface protruding to the outside of the main body. A position and a type of the first and second sensors may depend on a kind of mobile robot, and the object sensing unit may further include various sensors. The first sensors 420 may sense an object, especially, an obstacle existing in the moving direction of the mobile robot and forward the sensing information to the controller 300. That is, the first sensors 420 sense protrusions existing on the moving path of the mobile robot, products in a house, furniture, wall surfaces, wall corners and the like, and forward the sensing information to the controller 300. The first sensor may be an infrared sensor, an ultrasonic sensor, an RF sensor, a geomagnetic sensor and the like. The second sensor may sense an obstacle existing in front or at a side surface of the mobile robot, and forward the obstacle information to the controller 300. That is, the second sensor senses protrusions existing on the moving path of the mobile robot, products in a house, furniture, wall surfaces, wall corners and the like, and forwards the sensing information to the controller 300. The second sensor may be an infrared sensor, an ultrasonic sensor, an RF sensor, a Position Sensitive Device (PSD) sensor and the like.

The object sensing unit 400 may further include a cliff sensor installed at a lower surface of the main body so as to sense an obstacle on a bottom surface, for example, a cliff (precipice). The cliff sensor may be configured to obtain a stable measurement value irrespective of reflectivity of the bottom surface or a color difference, and be implemented as a type of an infrared module, such as a PSD sensor.

Referring to FIG. 1 and FIG. 4, the mobile robot may further include an input unit 600 to directly receive a control command. Also, a user or the like may input, through the input unit 600, a command for outputting one or more information of those information stored in the storage unit. The input unit 600 may be implemented as one or more buttons. For example, for a robot cleaner, the input unit 600 may be provided with a button for setting or changing a cleaning mode. The input unit 600 may further be provided with a button for receiving a command for returning to the charging station. The input unit 600, as shown in FIG. 1, may be installed on an upper surface of the mobile robot in form of a hard key, a soft key, a touchpad or the like. The input unit 600 may be alternatively implemented as a type of touch screen together with the output unit.

The output unit 700, as shown in FIG. 1, may be disposed on the upper surface of the mobile robot. An installation position or an installation type of the output unit 700 may be varied. For example, the output unit 700 may display on screen reservation information, a state of the battery, and a cleaning or traveling method, such as intensive cleaning, spatial expansion, zigzag driving and the like. The output unit 700 may output a current state of each unit configuring the mobile robot and a current cleaning state. The output unit 700 may also display obstacle information, position information, image information, indoor map, region, path and the like on a screen.

When the mobile robot is a robot cleaner, the mobile robot may further include a cleaning unit. The cleaning unit may include a dust bin for storing collected dust, a suction fan for providing a driving force to suck dust on a region to be cleaned, and a suction motor for sucking air by rotating the suction fan. With the configuration, the cleaning unit may suck dust or foreign materials on surroundings.

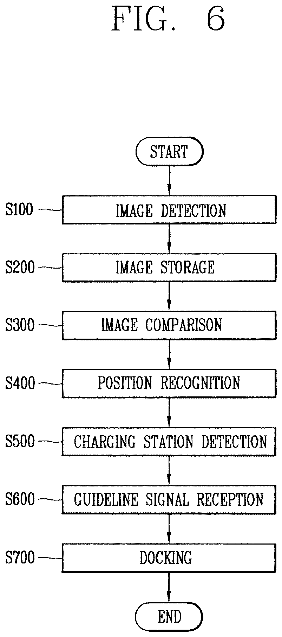

Referring to FIG. 6, a method for controlling a mobile robot in accordance with one exemplary embodiment may include an image detecting step of detecting image information by capturing images of surroundings (periphery) (S100), an image comparing step of comparing currently detected image information with pre-stored image information (S300), a position recognizing step of recognizing an absolute position of the mobile robot based on the comparison result from the image comparing step (S400), and a charging station detecting step of detecting a position of the charging station based on the recognition result of the absolute position (S500). The controlling method may further include an information storing step of storing the image information and position information corresponding to the image information. The configuration of the apparatus will be understood with reference to FIGS. 1 to 5.

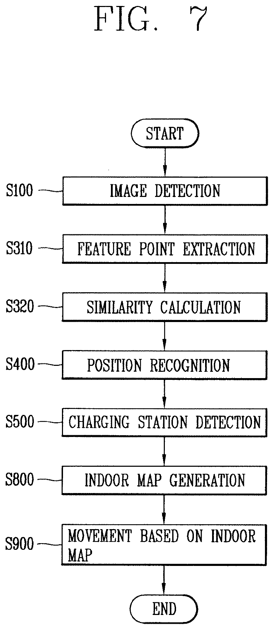

Referring to FIG. 7, the image comparing step S300 may include extracting one or more feature points each having feature point information from the image information (S310), and comparing those feature point information with each other to calculate a similarity between the image information (S320). The mobile robot extracts one or more feature points from the currently detected image information and the stored image information (S310). That is, the mobile robot extracts one or more feature points having coordinate information with respect to the plurality of images. Referring to FIG. 2, the feature points indicate natural indicators such as a ceiling of an upper region, a fluorescent lamp of a front region and an interior structure, which are from the images. Here, the feature point includes feature point information consisting of a position, an orientation and a descriptor on the image, and the descriptor indicates extraction information of the feature point. The descriptor indicates a characteristic of a feature point, and corresponds to a matrix having a predetermined size including the feature points in the image. The descriptor includes a type or a shape of a structure corresponding to a position extracted from the image.

The mobile robot calculates a similarity between the feature points based on the feature point information. The mobile robot matches the feature points with each other based on the pre-stored image information, namely, the images or the feature points, and the image information related to the images detected through cameras, and recognizes a position of the mobile robot (S400). Since the position information corresponding to the image information is further stored in addition to the image information, the mobile robot compares the image information at a position of a charging station with the currently detected image information, and detects the position of the charging station based on the comparison result (S500).

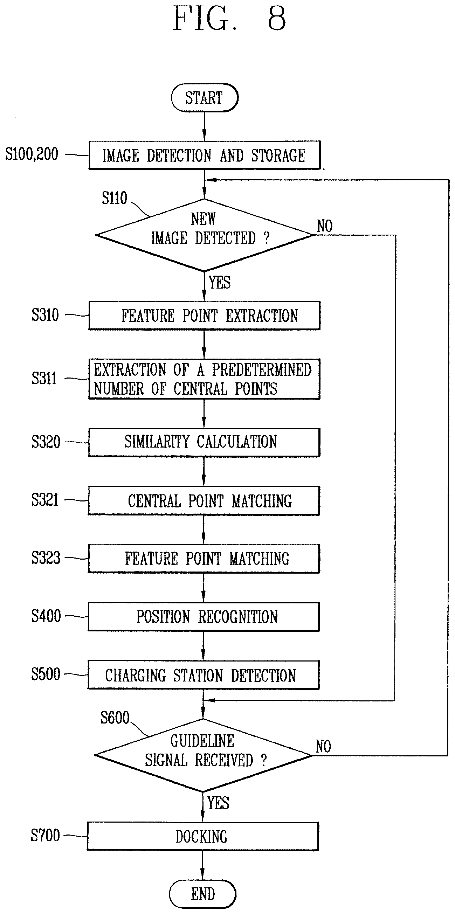

Referring to FIG. 8, the image comparing step S300 may further include dividing the feature points into a predetermined number of feature point clusters, extracting a central point representative of feature points belonging to each of the feature point clusters (S311), and matching the central points based on the feature point information related to the central points (S321).

The mobile robot divides the plurality of feature points into a predetermined number (for example, 16, 32, 64) of clusters to generate a predetermined number of feature point clusters, and extracts central points from the respective clusters (S311). A relationship between the feature points and the central points may be represented in form of histogram. Each image may be represented based on such relationship. The mobile robot may store each image information represented based on the central points. The mobile robot calculates a similarity of the plurality of images based on the central points, and matches the central points with each other based on the similarity calculation result (S321). The similarity of the images represented using the central points may be calculated from the relationship between the histograms. The similarity of the images may be calculated by a method, such as a running total of a Euclidean distance. Generally, images obtained by continuous capturing of a specific region exhibits a high similarity, whereas images obtained from different regions exhibit a low similarity. However, the images from the different regions may exhibit a high similarity. To distinguish those, the mobile robot performs a feature point matching between selected images (S323). For example, the mobile robot selects a predetermined number of images having a higher similarity calculated between the central points, and matches the feature points within the selected images with the feature points within the newly detected images (S323). Next, the mobile robot recognizes an absolute position based on the matching result of the feature points (S400). A matching algorithm for matching the central points or feature points may be existent in various forms, so detailed description of the matching algorithm will be omitted.

Referring to FIG. 6 and FIG. 8, the controlling method may further include a signal receiving step of receiving a guideline signal transmitted by the charging station (S600). The mobile robot receives a guideline signal generated from the charging station to check a position and an orientation of the charging station (S600). The charging station transmits the guideline signal for indicating an orientation and a distance such that the mobile robot can return thereto. The mobile robot receives the signal transmitted by the charging station, determines its current position, sets a moving direction and returns to the charging station. A sensor has a transmission/reception range. Accordingly, when the mobile robot is moved away from the charging station by more than a predetermined distance, the mobile robot is unable to receive the guideline signal. Here, the mobile robot may move to the position of the charging station which is detected based on the image information, and then receive the guideline signal so as to precisely dock with the charging station (S700).

Referring to FIG. 7, the controlling method may further include a map generating step of generating an indoor map based on the image information and the absolute position (S800), and a moving step of moving based on the indoor map (S900). The mobile robot may generate the indoor map based on the image information, the position recognized using the image information and the like (S800). The mobile robot may modify the position, which is recognized based on the image information, or the generated indoor map, based on the position information obtained by use of wheel sensors or the like. That is, the mobile robot may modify the position (absolute position), which is recognized based on the image information, based on the change in the position (relative position) sensed by sensors. The mobile robot may also modify the indoor map by reflecting the modified position. As another example, the mobile robot may sense obstacles located at the surroundings by using various types of sensors, and generate an indoor map or modify the generated indoor map based on the obstacle information. The mobile robot sets a path based on the generated indoor map so as to perform traveling or cleaning (S900).

As described above, in accordance with the exemplary embodiments, a mobile robot may be allowed to recognize a precise position thereof by detecting a plurality of images by an image detection unit, such as a camera, which is located at an upper surface or a front surface, extracting two or more feature points from the plurality of images, comparing and matching information related to each of the feature points. Also, the mobile robot may use image information to easily detect a position of a charging station and quickly move to the charging station upon the lack of residual battery capacity. In addition, the mobile robot may detect the position of the charging station based on the image information and receive a guideline signal within a signal reception range, so as to easily dock with the charging station.

**Claims**

1. A mobile robot comprising:

   an image detection unit (100) configured to detect image information by capturing images of surroundings;
   a position recognition unit configured to recognize a relative position;
   a storage unit (200) configured to store the image information; and
   a controller (300) configured to recognize an absolute position by comparing currently detected image information with stored image information, and detect a position of a charging station based on the recognition result of the absolute position, and **characterized by**
   modifying the absolute position based on a change of the relative position,
   wherein the controller (300) comprises:

      a feature point extraction module (310) configured to extract one or more feature points, each having feature point information, from the image information detected by the image detection unit (100) and the image information stored in the storage unit (200);
      a similarity calculation module (320) configured to calculate a similarity between those image information by comparing the feature point information;
      a position recognition module (330) configured to recognize the absolute position based on the similarity;
      a feature point cluster generation module (340) configured to divide the feature points into a predetermined number of feature point clusters;
      a central point extraction module (350) configured to extract a central point representative of feature points within each of the feature point clusters; and
      a central point matching module (360) configured to match the central points with each other based on the feature point information related to the central points,
      wherein a relationship between the feature points and the central points is represented in form of a histogram, and the similarity is calculated based on the histograms.

2. The robot of claim 1, wherein the storage unit (200) further stores position information corresponding to the image information.

3. The robot of claim 2, wherein the controller (300) is configured to compare image information related to a region where the charging station is located with the currently detected image information, and detects the position of the charging station based on the comparison result.

4. The robot of any one of claims 1 to 3, wherein the controller (300) further comprises a feature point matching module (370) configured to match feature points within images, having a similarity calculated more than a predetermined reference value, with feature points within the newly detected images.

5. The robot of any one of claims 1 to 4, further comprising an object sensing unit (400) having a charging signal sensor to receive a guideline signal transmitted by the charging station.

6. The robot of claim 5, wherein the object sensing (400) unit further comprises one or more of first sensors (420) installed at an outer circumferential surface at the front of a main body, a second sensor installed to have a surface protruding to the outside of the main body, and a cliff sensor installed at a lower surface of the main body to sense a cliff.

7. The robot of any one of claims 1 to 6, further comprising a cleaning unit configured to suck dust or foreign materials on surroundings.

8. A controlling method for a mobile robot comprising:

   an image detecting step of detecting image information by capturing images of surroundings;
   an image comparing step of comparing the currently detected image information and pre-stored image information;
   an absolute position recognizing step of recognizing an absolute position of the mobile robot based on the comparison result from the image comparing step;
   a relative position recognizing step of recognizing a relative position of the mobile robot;
   a change of the relative position sensing step of sensing a change of the relative position;
   an absolute position modifying step of modifying the absolute position of the mobile robot based on the change of the relative position; and
   a charging station detecting step of detecting a position of the charging station based on the recognition result of the absolute position,
   wherein the image comparing step comprises:

      dividing the feature points into a predetermined number of feature point clusters;
      extracting a central point representative of feature points within each of the feature point clusters; and
      matching those central points with each other based on the feature point information related to the central points,
      wherein a relationship between the feature points and the central points is represented in form of a histogram, and the similarity is calculated based on the histograms, and
      wherein the image comparing step comprises:

         extracting one or more feature points, each having feature point information, from the image information detected by the image detecting step and the pre-stored image information;
         calculating a similarity between those image information by comparing the feature point information; and
         recognizing the absolute position based on the similarity.

9. The method of claim 8, further comprising an information storing step of storing the image information and position information corresponding to the image information.

10. The method of claim 8 or 9, further comprising a signal receiving step of receiving a guideline signal transmitted by the charging station.

11. The method of any one of claims 8 to 10, further comprising:

   a map generating step of generating an indoor map based on the image information and the absolute position; and
   a moving step of moving the mobile robot based on the indoor map.

**Patentansprüche**

1. Mobiler Roboter, der aufweist:

   eine Bilddetektionseinheit (100), die so konfiguriert ist, dass sie Bildinformationen durch Aufnehmen von Bildern von Umgebungen detektiert;
   eine Positionserkennungseinheit, die so konfiguriert ist, dass sie eine Relativposition erkennt;
   eine Speichereinheit (200), die so konfiguriert ist, dass sie die Bildinformationen speichert; und
   eine Steuerung (300), die so konfiguriert ist, dass sie eine Absolutposition durch Vergleichen aktuell detektierter Bildinformationen mit gespeicherten Bildinformationen erkennt und eine Position einer Ladestation auf der Grundlage des Erkennungsergebnisses der Absolutposition detektiert, und **gekennzeichnet durch** Modifizieren der Absolutposition auf der Grundlage einer Änderung der Relativposition,
   wobei die Steuerung (300) aufweist:

      ein Merkmalspunkt-Extraktionsmodul (310), das so konfiguriert ist, dass es einen oder mehrere Merkmalspunkte, die jeweils Merkmalspunktinformationen haben, aus den durch die Bilddetektionseinheit (100) detektierten Bildinformationen und den in der Speichereinheit (200) gespeicherten Bildinformationen extrahiert;

ein Ähnlichkeitsberechnungsmodul (320), das so konfiguriert ist, dass es eine Ähnlichkeit zwischen diesen Bildinformationen durch Vergleichen der Merkmalspunktinformationen berechnet;

ein Positionserkennungsmodul (330), das so konfiguriert ist, dass es die Absolutposition auf der Grundlage der Ähnlichkeit erkennt;

ein Merkmalspunktcluster-Erzeugungsmodul (340), das so konfiguriert ist, dass es die Merkmalspunkte in eine vorbestimmte Anzahl von Merkmalspunktclustern aufteilt;

ein Mittelpunkt-Extraktionsmodul (350), das so konfiguriert ist, dass es einen Mittelpunkt als Darstellung von Merkmalspunkten in jedem der Merkmalspunktcluster extrahiert; und

ein Mittelpunkt-Abgleichmodul (360), das so konfiguriert ist, dass es die Mittelpunkte auf der Grundlage der auf die Mittelpunkte bezogenen Merkmalspunktinformationen miteinander abgleicht,

wobei eine Beziehung zwischen den Merkmalspunkten und den Mittelpunkten in Form eines Histogramms dargestellt wird und die Ähnlichkeit auf der Grundlage der Histogramme berechnet wird.

2. Roboter nach Anspruch 1, wobei die Speichereinheit (200) ferner Positionsinformationen speichert, die den Bildinformationen entsprechen.

3. Roboter nach Anspruch 2, wobei die Steuerung (300) so konfiguriert ist, dass sie Bildinformationen, die sich auf einen Bereich beziehen, in dem die Ladestation liegt, mit den aktuell detektierten Bildinformationen vergleicht, und die Position der Ladestation auf der Grundlage des Vergleichsergebnisses detektiert.

4. Roboter nach einem der Ansprüche 1 bis 3, wobei die Steuerung (300) ferner ein Merkmalspunkt-Abgleichmodul (370) aufweist, das so konfiguriert ist, dass es Merkmalspunkte in Bildern, die eine berechnete Ähnlichkeit haben, die einen vorbestimmten Referenzwert übersteigt, mit Merkmalspunkten in den neu detektierten Bildern abgleicht.

5. Roboter nach einem der Ansprüche 1 bis 4, ferner mit einer Objekterfassungseinheit (400) mit einem Ladesignalsensor, um ein durch die Ladestation gesendetes Leitliniensignal zu empfangen.

6. Roboter nach Anspruch 5, wobei die Objekterfassungseinheit (400) ferner aufweist: einen oder mehrere erste Sensoren (420), die an einer Außenumfangsfläche an der Vorderseite eines Hauptkörpers angebaut sind, einen zweiten Sensor, der so angebaut ist, dass er eine vom Hauptkörper nach außen vorstehende Oberfläche hat, und einen Absturzsensor, der an einer Unterseite des Hauptkörpers angebaut ist, um eine Klippe zu erfassen.

7. Roboter nach einem der Ansprüche 1 bis 6, ferner mit einer Reinigungseinheit, die so konfiguriert ist, dass sie Staub oder Fremdstoffe auf Umgebungen aufsaugt.

8. Steuerverfahren für einen mobilen Roboter, das aufweist:

einen Bilddetektionsschritt des Detektierens von Bildinformationen durch Aufnehmen von Bildern von Umgebungen;

einen Bildvergleichsschritt des Vergleichens der aktuell detektierten Bildinformationen und vorab gespeicherter Bildinformationen;

einen Absolutpositions-Erkennungsschritt des Erkennens einer Absolutposition des mobilen Roboters auf der Grundlage des Vergleichsergebnisses vom Bildvergleichsschritt;

einen Relativpositions-Erkennungsschritt des Erkennens einer Relativposition des mobilen Roboters;

einen Relativpositionsänderungs-Erfassungsschritt des Erfassens einer Änderung der Relativposition;

einen Absolutpositions-Modifizierungsschritt des Modifizierens der Absolutposition des mobilen Roboters auf der Grundlage der Änderung der Relativposition; und

einen Ladestations-Detektionsschritt des Detektierens einer Position der Ladestation auf der Grundlage des Erkennungsergebnisses der Absolutposition,

wobei der Bildvergleichsschritt aufweist:

Aufteilen der Merkmalspunkte in eine vorbestimmte Anzahl von Merkmalspunktclustern;

Extrahieren eines Mittelpunkts als Darstellung von Merkmalspunkten in jedem der Merkmalspunktcluster; und

Abgleichen dieser Mittelpunkte miteinander auf der Grundlage der auf die Mittelpunkte bezogenen Merkmalspunktinformationen,

wobei eine Beziehung zwischen den Merkmalspunkten und den Mittelpunkten in Form eines Histogramms dargestellt wird und die Ähnlichkeit auf der Grundlage der Histogramme berechnet wird und

wobei der Bildvergleichsschritt aufweist:

Extrahieren eines oder mehrerer Merkmalspunkte, die jeweils Merkmalspunktinformationen haben, aus den durch den Bilddetektionsschritt detektierten Bildinformationen und den vorab gespeicherten Bildinformationen;

Berechnen einer Ähnlichkeit zwischen diesen Bildinformationen durch Vergleichen der Merkmalspunktinformationen; und

Erkennen der Absolutposition auf der Grundlage der Ähnlichkeit.

9. Verfahren nach Anspruch 8, ferner mit einem Informationsspeicherschritt des Speichems der Bildinformationen und von Positionsinformationen, die den Bildinformationen entsprechen.

10. Verfahren nach Anspruch 8 oder 9, ferner mit einem Signalempfangsschritt des Empfangens eines Leitliniensignals, das durch die Ladestation gesendet wird.

11. Verfahren nach einem der Ansprüche 8 bis 10, das ferner aufweist:

einen Lageplanerzeugungsschritt des Erzeugens eines Raumlageplans auf der Grundlage der Bildinformationen und der Absolutposition; und

einen Bewegungsschritt des Bewegens des mobilen Roboters auf der Grundlage des Raumlageplans.

**Revendications**

1. Robot mobile comprenant :

une unité de détection d'image (100) configurée pour détecter des informations d'image par l'acquisition d'images d'un environnement ;

une unité de reconnaissance de position configurée pour reconnaître une position relative ;

une unité de stockage (200) configurée pour stocker les informations d'image ; et

un organe de commande (300) configuré pour reconnaître une position absolue par la comparaison d'informations d'image actuellement détectées à des informations d'image stockées, et détecter une position d'une station de chargement sur la base du résultat de reconnaissance de la position absolue, et **caractérisé par** la modification de la position absolue sur la base d'un changement de la position relative,

dans lequel l'organe de commande (300) comprend :

un module d'extraction de point caractéristique (310) configuré pour extraire un ou plusieurs points caractéristiques, chacun d'eux ayant des informations de point caractéristique, à partir des informations d'image détectées par l'unité de détection d'image (100) et des informations d'image stockée dans l'unité de stockage (200) ;

un module de calcul de similarité (320) configuré pour calculer une similarité entre ces informations d'image par la comparaison des informations de point caractéristique ;

un module de reconnaissance de position (330) configuré pour reconnaître la position absolue sur la base de la similarité ;

un module de génération de groupement de points caractéristiques (340) configuré pour diviser les points caractéristiques en un nombre prédéterminé de groupements de points caractéristiques ;

un module d'extraction de point central (350) configuré pour extraire un point central représentatif de points caractéristiques à l'intérieur de chacun des groupements de points caractéristiques ; et

un module d'appariement de points centraux (360) configuré pour apparier les points centraux l'un avec l'autre sur la base des informations de point caractéristique relatives aux points centraux,

dans lequel une relation entre les points caractéristiques et les points centraux est représentée sous la forme d'un histogramme, et la similarité est calculée sur la base des histogrammes.

2. Robot selon la revendication 1, dans lequel l'unité de stockage (200) stocke en outre des informations de position correspondant aux informations d'image.

3. Robot selon la revendication 2, dans lequel l'organe de commande (300) est configuré pour comparer des informations d'image relatives à une région dans laquelle la station de chargement est située aux informations d'image actuellement détectées, et détecter la position de la station de chargement sur la base du résultat de comparaison.

4. Robot selon l'une quelconque des revendications 1 à 3, dans lequel l'organe de commande (300) comprend en outre un module d'appariement de points caractéristiques (370) configuré pour apparier des points caractéristiques à l'intérieur d'images, ayant une similarité calculée supérieure à une valeur de référence prédéterminée, avec des points caractéristiques à l'intérieur des images nouvellement détectées.

5. Robot selon l'une quelconque des revendications 1 à 4, comprenant en outre une unité de détection d'objet (400) ayant un canal de signal de chargement pour recevoir un signal d'instruction transmis par la station de chargement.

6. Robot selon la revendication 5, dans lequel l'unité de détection d'objet (400) comprend en outre un ou plusieurs premiers capteurs (420) installés à une surface circonférentielle extérieure à l'avant d'un corps principal, un second capteur installé pour avoir une surface saillante vers l'extérieur du corps principal, et un capteur de précipice installé à une surface inférieure du corps principal pour détecter un précipice.

7. Robot selon l'une quelconque des revendications 1 à 6, comprenant en outre une unité de nettoyage configurée pour aspirer la poussière ou des corps étrangers dans l'environnement.

8. Procédé de commande d'un robot mobile comprenant :

   une étape de détection d'image pour la détection d'informations d'image par l'acquisition d'images de l'environnement ;
   une étape de comparaison d'image pour la comparaison des informations d'image actuellement détectées aux informations d'image préalablement stockées ;
   une étape de reconnaissance de position absolue pour la reconnaissance d'une position absolue du robot mobile sur la base du résultat de comparaison de l'étape de comparaison d'image ;
   une étape de reconnaissance de position relative pour la reconnaissance d'une position relative du robot mobile ;
   une étape de détection de changement de la position relative pour la détection d'un changement de la position relative ;
   une étape de modification de position absolue pour la modification de la position absolue du robot mobile sur la base du changement de la position relative ; et
   une étape de détection de station de chargement pour la détection d'une position de la station de chargement sur la base du résultat de reconnaissance de la position absolue,
   dans lequel l'étape de comparaison d'image comprend :

      la division des points caractéristiques dans un nombre prédéterminé de groupements de points caractéristiques ;
      l'extraction d'un point central représentatif de points caractéristiques à l'intérieur de chacun des groupements de points caractéristiques ; et
      l'appariement de ces points centraux l'un avec l'autre sur la base des informations de point caractéristique relatives aux points centraux,
      dans lequel une relation entre les points caractéristiques et les points centraux est représentée sous la forme d'un histogramme, et la similarité est calculée sur la base des histogrammes, et
      dans lequel l'étape de comparaison d'image comprend :

         l'extraction d'un ou plusieurs points caractéristiques, chacun d'eux ayant des informations de point caractéristique, à partir des informations d'image détectées par l'étape de détection d'image et des informations d'image préalablement stockées ;
         le calcul d'une similarité entre ces informations d'image par la comparaison des informations de point caractéristique ; et
         la reconnaissance de la position absolue sur la base de la similarité.

9. Procédé selon la revendication 8, comprenant en outre une étape de stockage d'informations pour le stockage des informations d'image et des informations de position correspondant aux informations d'image.

10. Procédé selon la revendication 8 ou 9, comprenant en outre une étape de réception de signal pour la réception d'un signal d'instruction transmis par la station de chargement.

11. Procédé selon l'une quelconque des revendications 8 à 10, comprenant en outre :

une étape de génération de cartographie pour la génération d'une cartographie d'intérieur sur la base des informations d'image et de la position absolue ; et
une étape de déplacement pour le déplacement du robot mobile sur la base de la cartographie d'intérieur.

# FIG. 1

# FIG. 2

# FIG. 3

# FIG. 4

# FIG. 5

# FIG. 6

```
        ( START )
           |
S100 ──[ IMAGE DETECTION ]
           |
S200 ──[ IMAGE STORAGE ]
           |
S300 ──[ IMAGE COMPARISON ]
           |
S400 ──[ POSITION RECOGNITION ]
           |
S500 ──[ CHARGING STATION DETECTION ]
           |
S600 ──[ GUIDELINE SIGNAL RECEPTION ]
           |
S700 ──[ DOCKING ]
           |
        ( END )
```

# FIG. 7

```
                    ( START )
                        |
S100 ——|    IMAGE DETECTION    |
                        |
S310 ——| FEATURE POINT EXTRACTION |
                        |
S320 ——| SIMILARITY CALCULATION |
                        |
S400 ——|  POSITION RECOGNITION  |
                        |
S500 ——| CHARGING STATION DETECTION |
                        |
S800 ——| INDOOR MAP GENERATION |
                        |
S900 ——| MOVEMENT BASED ON INDOOR
         MAP                    |
                        |
                    (  END  )
```

# FIG. 8

```
                    ( START )
                        │
                        ▼
S100,200 ──┤  IMAGE DETECTION AND STORAGE  │
                        │
                        ▼
  S110 ──        ╱ NEW           ╲    NO
              ╱  IMAGE DETECTED ?  ╲────┐
                ╲                 ╱     │
                        │ YES           │
                        ▼               │
  S310 ──┤   FEATURE POINT EXTRACTION   │
                        │               │
                        ▼               │
  S311 ──┤ EXTRACTION OF A PREDETERMINED│
          │ NUMBER OF CENTRAL POINTS    │
                        │               │
                        ▼               │
  S320 ──┤    SIMILARITY CALCULATION    │
                        │               │
                        ▼               │
  S321 ──┤    CENTRAL POINT MATCHING    │
                        │               │
                        ▼               │
  S323 ──┤    FEATURE POINT MATCHING    │
                        │               │
                        ▼               │
  S400 ──┤    POSITION RECOGNITION      │
                        │               │
                        ▼               │
  S500 ──┤  CHARGING STATION DETECTION  │
                        │               │
                        ▼               │
  S600 ──      ╱ GUIDELINE      ╲   NO  │
              ╱ SIGNAL RECEIVED ? ╲─────┘
                ╲                ╱
                        │ YES
                        ▼
  S700 ──┤         DOCKING          │
                        │
                        ▼
                     ( END )
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   GB 2376536 A